(19) **Europäisches Patentamt**
**European Patent Office**
**Office européen des brevets**

(11) **EP 4 267 663 B1**

(12) **EUROPEAN PATENT SPECIFICATION**

(45) Date of publication and mention
of the grant of the patent:
**22.07.2026 Bulletin 2026/30**

(21) Application number: **21844658.1**

(22) Date of filing: **21.12.2021**

(51) International Patent Classification (IPC):
**C08J 3/22** *(2006.01)* **C08L 23/06** *(2006.01)*
**C08K 3/26** *(2006.01)*

(52) Cooperative Patent Classification (CPC):
(C-Sets available)
**C08J 3/226; C08L 23/06;** C08J 2423/04;
C08J 2423/06; C08J 2423/08; C08J 2423/10;
C08J 2423/16; C08K 2003/267 (Cont.)

(86) International application number:
**PCT/EP2021/087141**

(87) International publication number:
**WO 2022/136465 (30.06.2022 Gazette 2022/26)**

(54) **HIGH CONCENTRATION POLYMER MASTERBATCHES OF LIQUID PHOSPHITE ANTIOXIDANTS WITH IMPROVED RESISTANCE TO HYDROLYSIS**

HOCHKONZENTRIERTE POLYMERMASTERBATCHES VON FLÜSSIGEN PHOSPHITANTIOXIDANTIEN MIT VERBESSERTER HYDROLYSEBESTÄNDIGKEIT

MÉLANGES-MAÎTRES DE POLYMÈRE À CONCENTRATION ÉLEVÉE D'ANTIOXYDANTS DE PHOSPHITE LIQUIDES PRÉSENTANT UNE MEILLEURE RÉSISTANCE À L'HYDROLYSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2020 EP 20217063**

(43) Date of publication of application:
**01.11.2023 Bulletin 2023/44**

(73) Proprietor: Ingenia Polymers International S.A.
**2520 Luxembourg (LU)**

(72) Inventors:
• **CHARLTON, John Zachariah**
**Brantford, Ontario N3T 5M8 (CA)**
• **GIAMMARIA, Paul Marco**
**Hamilton, Ontario L9C-2L1 (CA)**
• **D'UVA, Salvatore**
**Brantford, Ontario N3S 0H4 (CA)**
• **LIU, Zhehui**
**Houston, Texas 77044 (US)**

• **KHALED AH SAAD, Ahmed**
**Burlington, Ontario L7M 0C9 (CA)**
• **MEEREBOER, Kjeld Wiebe**
**Erin, Ontario (CA)**

(74) Representative: **Tomkins & Co**
**5 Dartmouth Road**
**Dublin 6, D06 F9C7 (IE)**

(56) References cited:
**US-A1- 2007 232 765** **US-A1- 2011 263 760**
**US-B2- 7 842 748**

• **JOHNSON BRIAN ET AL: "Impact of improved phosphite hydrolytic stability on the processing stabilization of polypropylene", JOURNAL OF VINYL AND ADDITIVE TECHNOLOGY, vol. 11, no. 4, 1 December 2005 (2005-12-01), US, pages 136 - 142, XP055806278, ISSN: 1083-5601, DOI: 10.1002/vnl.20052**

EP 4 267 663 B1

(52) Cooperative Patent Classification (CPC): (Cont.)

C-Sets
**C08L 23/06, C08L 23/04, C08L 23/10, C08K 3/26, C08K 5/524;**
**C08L 23/06, C08L 23/04, C08L 23/10, C08K 3/26, C08K 5/526**

## Description

## Technical Field

The present invention relates to high concentration masterbatches of liquid phosphite antioxidants with improved hydrolytic stability and reduced blooming for use as stabilizers in polymers including polyolefins such as polyethylene, polypropylene and copolymers thereof.

## Background of the Invention

The use of organic phosphites as antioxidants for the protection of polymers from thermo-oxidative degradation is well known in the art. Phosphite antioxidants are used at low concentrations - usually below 1% - to protect the polymer from thermo-oxidative degradation during processing and end-use. One of the most widely used organic phosphites is tris(2,4-di-tert-butylphenyl)phosphite (CAS#: 31570-04-4) referred to here as AO168. AO168 exhibits moderate activity as a peroxide decomposing antioxidant and has high resistance to hydrolysis but shows poor solubility in many polyolefins. The poor solubility can lead to blooming of the solid additive to the surface of polymer articles and plate out on processing equipment.

Tris(p-nonylphenyl)phosphite (TNPP) is a liquid phosphite at room temperature and exhibits good activity as an antioxidant, high solubility in polyolefins and low plate out or blooming at the typical concentrations used for stabilization. TNPP had been widely used to stabilize polyethylene. There has, however, been a desire to replace TNPP due to concerns over the estrogenicity of the nonylphenyl component. This has led to the development of more than one alternative nonylphenyl-free liquid phosphite.

US Patent No. 7,888,414 discloses a liquid phosphite composition comprising a blend of at least two alkylated phenol phosphites. SI Group (Schenectady, NY, USA) produces and markets products matching the composition disclosed in this patent under the tradename Weston® 705T. Weston® 705T is comprised primarily of four distinct aryl phosphites. This phosphite blend exhibits good activity as an antioxidant, good solubility in polyolefins, and resistance to blooming and plate out at the low concentrations in polyolefin end-use applications.

US Patent No. 8,563,637 and US 8,981,042 discloses unique alkylphenol-free liquid polymeric polyphosphites. Dover Chemical (Dover, OH, USA) produces and markets liquid phosphites Doverphos® LGP-11 and Doverphos® LGP-12 matching the liquid phosphites disclosed in USP 8,563,637 B2 and US 8,981,042, respectively. These phosphites exhibit good activity as an antioxidant, high solubility in polyolefins such as polyethylene and polypropylene, and low plate out and bloom at the typical end-use applications for polyolefins.

The two aforementioned patent disclosures describe liquid phosphites. Although quite different in terms of their structure and in various performance characteristics, including activity, resistance to hydrolysis, and solubility in different polymers, there are some common challenges with respect to their liquid state and their incorporation and use in polymers via masterbatch.

Phosphite antioxidants, and other additives, can be routinely added to polyolefins during post-reactor pelletizing operations. Pelletizing is typically achieved by extrusion through a die via a twin-screw extruder, melt pump or similar equipment as is known in the art. Numerous techniques can be employed to introduce the additives to the polymer stream. Liquid phosphite antioxidants are typically dosed directly in liquid form to the post reactor polymer stream, where they are mixed into the polymer prior to pelletization. The storage, handling and dosing systems of the liquid phosphite antioxidant are well known in the art. Such systems are designed to exclude oxygen and ambient moisture in order to prevent hydrolysis and oxidation of the stabilizer.

However, in some post-reactor pelletizing operations liquid feeding systems may not be available, or it may be otherwise desirable to handle, feed and dose the liquid phosphite in a solid form. This can be achieved by the preparation of a masterbatch of the liquid phosphite in a solid polymer carrier. Much effort has been spent by industry to incorporate high levels of additives into polymer masterbatches. The incorporation of relatively low viscosity liquid additives, such as liquid phosphites, in a polymer carrier at high levels can be challenging. Poorly incorporated additives can lead to blooming and consequent agglomeration of pellets and associated handling issues. Blooming is an issue of critical importance in the preparation of high concentration masterbatches of additives, including, in particular, liquid phosphites.

Migration and blooming of additives in polymers has been studied extensively. And it is apparent that migration of liquid phosphites in a polymer carrier is determined by the solubility of the phosphite in the carrier, the diffusion coefficient of the additive in the polymer and the concentration gradient of the system.

In a masterbatch the concentration of additive may exceed the solubility of the additive in the carrier polymer. In this case, the additive may exist as a separate phase. It is understood that the additive is excluded from the crystalline regions of a semi-crystalline polymer and the additive is concentrated in the amorphous regions. The solubility of an additive may be greater in a more amorphous polymer or in a polymer with which it has better compatibility. In the case of a two-phase or multiphase polymer blend the additive will partition in the system according to its respective solubility in the different phases.

Diffusion is a kinetic process. Diffusion of an additive in a polymer is achieved by the cooperative motion of the additive and the polymer. The diffusion or transport of an additive in a polymer is a function of both the polymer and the diffusant; as a result the diffusion rates may be influenced by such characteristics of the polymer as crystallinity, morphology, molecular weight, and free volume of the polymer as well as characteristics of the additive such as compatibility, polarity and molecular size of the additive. It is important to note that external factors such as temperature, pressure and concentration gradient will also have an effect on the diffusion of the additive in a polymer.

In addition to the aforementioned challenges with regards to migration and blooming, in the case of a liquid phosphite additive masterbatch there is the additional challenge of preventing hydrolysis of the liquid phosphite during storage. While the polymer carrier may afford some protection to the liquid phosphite in that it can act as a physical barrier between the liquid phosphite and the environment, polyolefins are known to be permeable to moisture to varying degrees. The moisture permeability of a polyolefin as a film or sheet can be quantified as the Water Vapour Transmission Rate (WVTR) according to ASTM F1249-13 or ASTM F3299 - 18. The relative permeability of polyolefins varies as a function of, among other things, the molecular architecture, crystalline structure and crystalline content of the polymer. Higher density polyethylenes, for example, generally have lower moisture permeability than lower density polyethylenes. A higher density polyethylene might therefore be assumed to provide improved protection from moisture and thereby reduce hydrolysis of liquid phosphite in a liquid phosphite masterbatch. However, higher density polyolefins have a higher percentage of crystalline content and so have less amorphous content in which to contain the liquid phosphite. The general trend is that the solubility of a liquid phosphite is lower in a higher density polyethylene than an otherwise comparable (similar MFR, molecular weight) lower density polyethylene. This is further complicated by migration or blooming of the liquid additive to the surface of the masterbatch. A bloomed liquid phosphite will be exposed to hydrolysis in a humid environment.

Numerous techniques have been employed in order to increase the concentration of liquid additives in a masterbatch.

US Patent Application No. 2019/0300659 (2019) describes liquid containing polyolefin masterbatches achieved by adsorbing high concentrations of organosilanes on porous polypropylene or propylene copolymer. No discussion of liquid phosphites or hydrolysis of additives is contained in this patent. It can be recognized that while a porous polymer might be used to carry a high concentration of liquid phosphite, it would provide no barrier to the ingress of moisture and consequent hydrolysis of the phosphite.

US Patent No. 8,445,567 (2013) describes a method for reducing plate out of solid phosphite additives in polymers. A polyalkylene glycol and/or a polycaprolactum are described as anti-bloom additives and are used in combination with solid phosphites to prevent blooming of the phosphite. The phosphites of the claims are solids at room temperature and those described in the examples have extremely low solubility in the polymer, which is the cause of blooming. No application to liquid phosphites is described.

The use of coadditives and blending has been described to inhibit the hydrolysis of phosphite antioxidants.

US Patent 3,787,537 describes improved resistance to hydrolysis of TNPP and other phosphites with the use of a small percentage of amines such as triisopropanolamine (TIPA). Such amines are already used routinely in liquid phosphites, and while they improve resistance to hydrolysis, they do not provide sufficient protection to the liquid phosphites of the present invention to allow production of a hydrolytically stable masterbatch.

Johnson et al. (Impact of Improved Phosphite Hydrolytic Stability on the Processing Stabilization of Polypropylene, J. Vinyl Add Tech, 2005) describe improvements in hydrolytic stability of solid phosphites by dilution of a blend with coadditives, chemical inhibition via an acid scavenger or basic coadditive, and a barrier effect by melting a lower melting point additive such as a phenol to encapsulate the solid phosphite in an additive blend in the absence of a polymer carrier. The form and method disclosed relies on melting the lowest melting point component of a blend and using it as the carrier for the other components. The hydrolytically stable additive carrier component acts as a barrier for the dispersed hydrolytically unstable component. This method could not be applied for a liquid phosphite antioxidant.

US 7 842 748 B2 discloses a masterbatch composition comprising 35 to 85% by mass of an additive for plastics, 5 to 25% by mass of an olefin polymer and 10 to 60% by mass of a polyolefin resin as a carrier.

None of the aforementioned methods addresses the issues of a liquid phosphite blooming out of or hydrolyzing in a polymer masterbatch. None of these methods address both blooming and hydrolysis of liquid phosphites in a masterbatch.

Thus there is a need for a liquid phosphite masterbatch of increased concentration and reduced blooming. There is also a need for a liquid phosphite masterbatch of increased concentration which exhibits improved resistance to hydrolysis. Further, there is a need for a liquid phosphite masterbatch of increased concentration which exhibits both low blooming and high resistance to hydrolysis, allowing for sufficient shelf life for commercial supply, distribution and use of such a masterbatch.

EP 4 267 663 B1

## Summary of the Invention

According to the present invention there is provided a polyolefin masterbatch composition containing liquid phosphite antioxidants intended for use as antioxidizing preparations for polyolefins. The polyolefin masterbatches herein exhibit good shelf stability including reduced blooming of the liquid phosphite and reduced consumption of the active phosphite during storage due to hydrolysis or other undesirable reactions.

In one aspect, the present invention comprises a polyolefin masterbatch composition comprising:

a. a liquid phosphite antioxidant present in an amount of greater than about 4 % by weight based on the total weight of the composition;
b. an inorganic solid coadditive capable of acting as an acid neutraliser present in an amount of 5 to 100 % by weight based on the total weight of phosphite antioxidant in the composition; and
c. an immiscible polymer blend which comprises:

i. a first carrier comprising a polyethylene or polyethylene copolymer with a density greater than about 0.910 g/cm$^3$ or an isotactic homopolymer polypropylene or polypropylene impact copolymer with a density greater than about 0.898 g/cm$^3$ or a blend or combination thereof; and
ii. a second carrier comprising a polyolefin or polyolefin copolymer with a density less than about 0.895 g/cm$^3$ or an ethylene-vinyl acetate copolymer or an acid copolymer or a blend or combination thereof.

The liquid phosphite thus has a lower solubility in the first carrier than in the second carrier.

Suitably the polyethylene or polyethylene copolymer of the first carrier has a density greater than about 0.912 g/cm$^3$. The polyethylene or polyethylene copolymer of the first carrier may have a density greater than about 0.914 g/cm$^3$. Suitably the polyolefin or polyolefin copolymer of the second carrier has density less than about 0.893 g/cm$^3$ or about 0.890 g/cm$^3$.

The ethylene-vinyl acetate copolymer may have a vinyl acetate content of greater than 10%, or greater than 15%, or greater than 20% by weight.

In some embodiments the first carrier is characterized by a solubility of a liquid phosphite in the carrier of less than about 9% at 45 °C. The second carrier may be characterized by a solubility of a liquid phosphite in the carrier of greater than about 11% at 45 °C. The solubilities may be determined by the methods as described herein.

The liquid phosphite antioxidant may be present in an amount of greater than about 4.5 wt%, or greater than about 5 wt% wherein the weight percentage is based on the total weight of the composition.

The liquid phosphite antioxidant may be selected from the group comprising: triaryl phosphites, trialkyl phosphites, alkylphenol-free polymeric polyphosphites, and combinations thereof.

Liquid phosphites suitable for practising the present invention include tri(alkylaryl) liquid phosphite antioxidants as claimed in US 7,888,414, liquid phosphites produced under the tradename Weston® 705T, alkylphenol-free liquid polymeric polyphosphites as claimed in US 8,563,637 and US 8,981,042.

Suitably, the liquid phosphite antioxidant is selected from the group comprising: tris(p-tert-pentylphenyl) phosphite, bis[2,4-bis(2-methylbutan-2-yl)phenyl] 4-(2-methylbutan-2-yl)phenyl phosphite, 2,4-bis(2-methylbutan-2-yl) phenyl bis[4-(2-methylbutan-2-yl)phenyl] phosphite, tris[4-(2-methylbutan-2-yl)phenyl] phosphite, and combinations thereof. Bis[2,4-bis(2-methylbutan-2-yl)phenyl] 4-(2-methylbutan-2-yl)phenyl phosphite, 2,4-bis(2-methylbutan-2-yl) phenyl bis[4-(2-methylbutan-2-yl)phenyl] phosphite, tris[4-(2-methylbutan-2-yl)phenyl] phosphite are the components of the commercially available Weston 705™, which is a liquid, although the components individually may not be. They are however included in the definition of liquid phosphite antioxidant for the purposes of this invention.

In a preferred embodiment, the liquid phosphite antioxidant is a reaction mass of bis[2,4-bis(2-methylbutan-2-yl) phenyl] 4-(2-methylbutan-2-yl)phenyl phosphite, 2,4-bis(2-methylbutan-2-yl)phenyl bis[4-(2-methylbutan-2-yl)phenyl] phosphite, and tris[4-(2-methylbutan-2-yl)phenyl] phosphite (CAS# 939402-02-5). The liquid phosphite antioxidant may be tris(p-tert-pentylphenyl) phosphite. Alternatively, the liquid phosphite antioxidant comprises one or more alkylphenol-free polymeric polyphosphites. The liquid phosphite antioxidant is liquid at a temperature of less than about 60 °C, at a temperature of less than about 50 °C, or at a temperature of less than about 45 °C.

The liquid phosphite antioxidant may be the commercial product Weston™ 705T. In an alternative embodiment, the liquid phosphite antioxidant may be the commercial product Doverphos® LGP11. In a further alternative embodiment, the liquid phosphite antioxidant may be the commercial product Doverphos® LGP12.

The inorganic solid coadditive is capable of acting as an acid neutraliser. It may be present in the range 5 to 100% or in the range 7 to 80% or in the range 10 to 50% or in the range 10 to 30% by weight based on the weight of the phosphite antioxidant in the composition. In some embodiments, the inorganic solid coadditive is chosen from the group comprising: zinc oxide, calcium oxide, synthetic hydrotalcites, hydrotalcite-like synthetic materials, dehydrated synthetic hydrotalcites, and combinations thereof. The inorganic solid coadditive may be a hydrotalcite or hydrotalcite-like material. Alternatively it may be a calcined anhydrous hydrotalcite. It may be zinc oxide or calcium oxide. Suitably, the inorganic solid coadditive is of a particle size suitable for dispersion into polyolefins. The mean particle size may be less than 100 microns, for example less than 10 microns. By way of example, for zinc oxide a particle size of 0.12 microns is suitable, for calcium oxide a size of 3.5 to 5 microns is suitable and for hydrotalcites a size of 0.10 to 0.6 microns is suitable.

The inorganic solid coadditive may be surface treated in order to aid dispersion into a polymer. Suitable treatments include without limitation treatment with metal stearates, stearic acid, polydimethylsiloxane, or functional silanes. Desirably, the inorganic solid coadditive is capable of absorbing water. In some embodiments, the composition may further comprise an organic acid neutraliser. Suitably, this may be triisopropanolamine (TIPA).

The polymers which make up the immiscible polymer blend are immiscible in the solid state. The immiscible polymer blend may have a disperse morphology or a co-continuous morphology. Desirably, the immiscible polymer blend has a disperse morphology. In some embodiments, the immiscible polymer blend may have a disperse morphology wherein the first carrier constitutes the continuous phase and the second carrier constitutes the disperse phase. In some alternative embodiments, the immiscible polymer blend may have a co-continuous morphology wherein the first and second carriers constitute co-continuous phases.

The first carrier may be characterised by a solubility of the liquid phosphite antioxidant in said first carrier of less than about 9% at 45 °C. Suitably, the first carrier is characterised by a solubility of the liquid phosphite antioxidant in said first carrier of less than about 8% at 45 °C. Preferably, the first carrier is characterised by a solubility of the liquid phosphite antioxidant in said first carrier of less than about 6% at 45 °C.

The first carrier may be selected from the group comprising high-density polyethylene, linear low-density polyethylene, copolymers thereof, and combinations thereof. In some embodiments, the first carrier may comprise a polyethylene with a density of greater than about 0.914 g/cm$^3$.

In some embodiments, the first carrier may comprise a branched low density polyethylene (LDPE) with a density of between about 0.91 and 0.94 g/cm$^3$. In some embodiments, the first carrier may comprise a substantially linear polyolefin or alpha-olefin copolymer. Suitably, the first carrier may comprise a substantially linear polyethylene or polyethylene copolymer with a density of between about 0.91 and 0.965 g/cm$^3$.

In some embodiments, the first carrier comprises a linear low density polyethylene (LLDPE) with a density of between about 0.91 and 0.925 g/cm$^3$. This may be selected from the group comprising: butene, hexene, octene, or other low (short-chain) alpha-olefin copolymers of polyethylene. Preferably, the first carrier does not comprise lower density linear plastomers or elastomers, i.e. those with a density of less than about 0.895 g/cm$^3$.

In some embodiments, the first carrier comprises a medium-density polyethylene (MDPE) with a density of between about 0.925 and 0.940 g/cm$^3$. This may be selected from the group comprising: butene, hexene, or other low alpha-olefin copolymers of polyethylene.

In some embodiments, the first carrier comprises a high-density polyethylene (HDPE) with a density of equal to or greater than about 0.940 g/cm$^3$. This may be selected from the group comprising: butene, hexene, or other low alpha-olefin copolymers of polyethylene. It may also be a homopolymer HDPE. Suitably, where the first carrier is a substantially linear polyethylene or polyethylene copolymer, it is characterised by a low water vapour transmission rate. In some embodiments, the first carrier comprises a semi-crystalline polypropylene. Suitably, the first carrier comprises a polypropylene homopolymer.

The second carrier may be characterised by a solubility of the liquid phosphite antioxidant in said second carrier of greater than about 11% at 45 °C. Suitably, the second carrier is characterised by a solubility of the liquid phosphite antioxidant in said second carrier of greater than about 12% at 45 °C. Preferably, the second carrier is characterised by a solubility of the liquid phosphite antioxidant in said second carrier of greater than about 13% at 45 °C.

The second carrier may be selected from the group comprising ethylene-alpha olefin copolymers, ethylene-propylene copolymers, ethylene-vinyl acetate copolymers, and combinations thereof. In some embodiments, the second carrier comprises an ethylene-propylene copolymer.

Suitably, the second carrier comprises an ethylene-propylene copolymer with a density of less than about 0.895 g/cm$^3$ and a melt flow rate of between about 0.2 and 100 g/10 min, when measured in accordance with ASTM D123-8-13 at 190 °C and 2.16 kg. In a preferred embodiment, the second carrier comprises an ethylene-propylene copolymer with a density of less than about 0.88 g/cm$^3$ and a melt flow rate of between about 0.5 and 50 g/10 min, when measured in accordance with ASTM D123-8-13 at 190 °C and 2.16 kg.

In some embodiments, the second carrier comprises an ethylene-vinyl acetate (EVAc) copolymer. Suitably, the second carrier comprises an EVAc copolymer with a melt flow rate of between about 0.2 and 50 g/10 min, when measured in accordance with ASTM D123-8-13 at 190 °C and 2.16 kg.

In some embodiments, the second carrier comprises an ethylene-alpha-olefin copolymer. Suitably, the second carrier comprises an ethylene-alpha-olefin copolymer with a density of less than about 0.905 g/cm$^3$. In a preferred embodiment, the second carrier comprises an ethylene-alpha-olefin with a density of less than about 0.895 g/cm$^3$ and a melt flow rate of between about 0.2 and 50 g/10 min, when measured in accordance with ASTM D123-8-13 at 190 °C and 2.16 kg.

In some embodiments, the second carrier comprises an acid copolymer. This may be selected from the group comprising ethylene-acrylic acid copolymers, ethylene-methyl acrylate copolymers, or combinations thereof. In some embodiments, the second carrier constitutes a dispersed phase with a diameter of less than about 100 microns. Suitably, the second carrier constitutes a dispersed phase with a diameter of less than about 10 microns. In a preferred embodiment, the second carrier constitutes a dispersed phase with a diameter of less than about 5 microns.

In some embodiments, the first and second carriers are present in a ratio of between about 20:1 and about 2:3. Suitably, the first and second carriers are present in a ratio of between about 15:1 and about 3:2.

Compositions of the present invention may further comprise additional additives or copolymers as known in the art.

## Brief Description of the Drawings

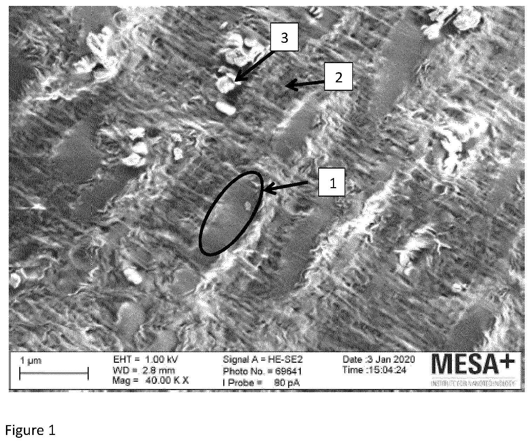

**Figure 1** depicts a scanning electron microscope (SEM) image demonstrating the morphology of Example E10. Item 1 is an elongated dispersed phase of Vistamaxx™ 6502, the second carrier. The Vistamaxx™ is identifiable as the phase with the smoother topography in this cryo-microtomed sample. Item 2 is the continuous Surpass® CCs-757-A High Density Polyethylene (HDPE) matrix, which is the first carrier. The Surpass® is identifiable by the rougher topography. Item 3 shows mineral-like particles which are the DHT-4C acid neutralizing coadditive.

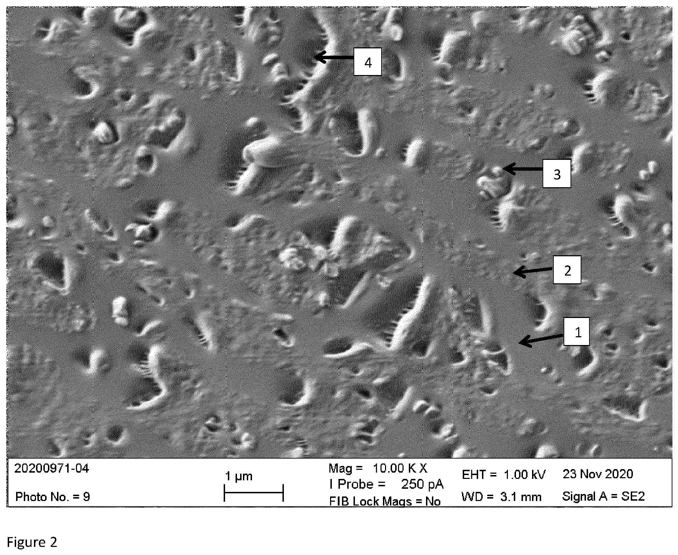

**Figure 2** depicts an SEM image of Example E35 demonstrating the morphology of the example, which appears to be co-continuous. Item 1 is the Vistamaxx™ 6502, the second carrier. The Vistamaxx™ is identifiable as the phase with the smoother topography in this cryo-microtomed sample. Item 2 is the Surpass® CCs-757-A High Density Polyethylene (HDPE), the first carrier. Item 3 shows mineral-like particles, which are the DHT-4C acid neutralizing coadditive. Item 4 shows debonding of the first and second carrier believed to be caused by the microtoming process.

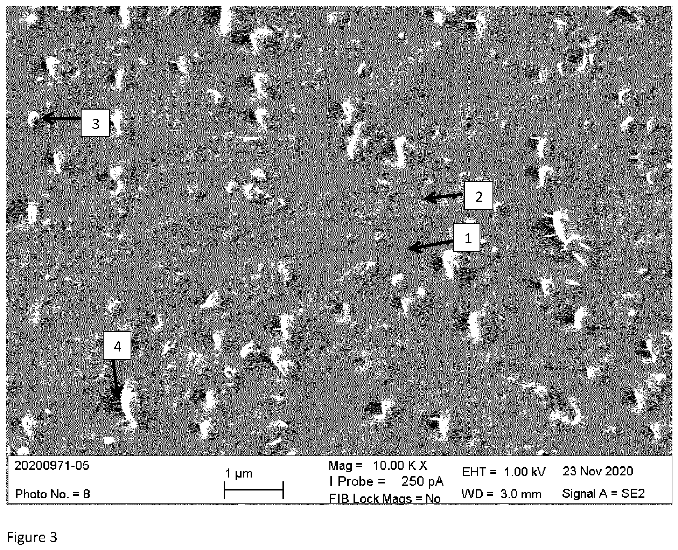

**Figure 3** depicts an SEM image of Example E36 demonstrating the morphology of the example, which appears to be co-continuous. Item 1 is the Vistamaxx™ 6502, the second carrier. The Vistamaxx™ is identifiable as the phase with the smoother topography in this cryo-microtomed sample. Item 2 is the Surpass® CCs-757-A High Density Polyethylene (HDPE), the first carrier. Item 3 shows mineral-like particles, which are the DHT-4C acid neutralizing coadditive. Item 4 shows debonding of the first and second carrier believed to be caused by the microtoming process.

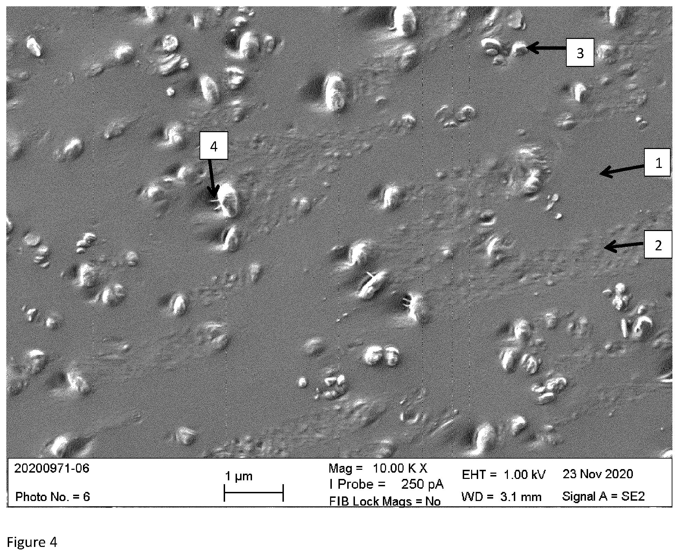

**Figure 4** depicts an SEM image of Example E37 demonstrating the morphology of the example. It appears that Vistamaxx™ is the continuous phase. Item 1 is the Vistamaxx™ 6502, the second carrier. The Vistamaxx™ is identifiable as the phase with the smoother topography in this cryo-microtomed sample. Item 2 is the Surpass® CCs-757-A High Density Polyethylene (HDPE), the first carrier. Item 3 showing mineral-like particles are the DHT-4C acid neutralizing coadditive. Item 4 shows debonding of the first and second carrier believed to be caused by the microtoming process.

## Detailed Description of the Invention

The particulars of the invention shown herein are by way of example. They are meant to illustrate various embodiments of the invention and are not meant to limit the scope of the invention.

Given below are the condensed (by no means exhaustive) customary definitions known in the art of certain terms which may aid in the description of the invention. The 'Compendium of Polymer Terminology and Nomenclature, IUPAC Recommendations, 2008' by RSC Publishing (hereafter referred to as the IUPAC Compendium) is referred to throughout the description. The IUPAC definition should be considered, unless another definition is offered herein, in which case the definition offered herein shall be considered.

'Base Polymer' is the polymer which is to be colored, functionalized, stabilized or otherwise modified by additives or masterbatch.

'Blooming' is defined with reference to the IUPAC Compendium as a process in which one component of a polymer blend, usually not a polymer, undergoes phase separation and migration to an external surface of the polymer blend. In the context of the current invention this includes the migration of a liquid phosphite to the external surface of a masterbatch of liquid phosphite.

'Carrier Polymer' is the polymer or polymer blend that, when combined with fillers, colorants or additives, will encapsulate them to form a masterbatch. The carrier polymer should preferably be compatible with the base polymer that is being modified by the masterbatch.

'Co-continuous phase domains', or 'co-continuous phases' are the phases, in an immiscible polymer blend, in which a continuous path through either phase domain may be drawn to all phase domain boundaries without crossing any phase domain boundary.

'Co-continuous morphology', is a morphology of an immiscible polymer blend, comprised of co-continuous phase domains.

'Continuous Phase Domain', also referred to as the 'continuous phase', is the phase domain, in an immiscible polymer blend with a disperse morphology, through which a continuous path to all phase domain boundaries may be drawn without crossing a phase domain boundary.

'Compatible Polymer Blend', is defined in the IUPAC Compendium as an immiscible polymer blend exhibiting macroscopically uniform physical properties.

'Copolymer', is defined in the IUPAC Compendium as a polymer derived from more than one species of monomer. Note: Copolymers that are obtained by copolymerization of two monomer species are sometimes termed bipolymers, those obtained from three monomers terpolymers, those obtained from four monomers quaterpolymers, etc.

'Disperse Morphology', is a morphology of an immiscible polymer blend comprised of a dispersed phase domain and continuous phase domain.

'Dispersed Phase Domain', or simply 'dispersed phase' is the phase domain, in an immiscible polymer blend which forms a disperse morphology, that is surrounded by a continuous phase but isolated from all other similar phase domains within the mixture.

'Immiscible polymer blend', also referred to as a heterogeneous polymer blend, is defined in the IUPAC Compendium and further clarified here. An immiscible polymer blend is a polymer blend which forms more than a single phase. It should be noted that immiscibility of a given blend of polymers may be limited to a certain range of temperature, pressure and ratio of the constituent polymers. It should also be noted that miscibility should not be confused with compatibility and that an immiscible polymer blend may be a compatible polymer blend or an incompatible polymer blend. It should also be noted that an immiscible polymer blend may form a disperse phase morphology, or a co-continuous phase morphology depending on various factors including the ratio of components, their viscosities, interfacial tensions, and mixing conditions, as is known in the art.

'Masterbatch' is a concentrated mixture of pigments and/or additives which are encapsulated or dissolved during a heating and mixing process into a carrier polymer which is then cooled and cut into a granular shape. A masterbatch can be added to a base polymer in order to deliver the desired concentration of pigments or additives to the base polymer.

'Melt Flow Rate' (MFR) is as defined in ASTM D1238-20. Units of measure are in grams per 10 minutes.

'Plate out' is the migration of additives out of the polymer and their deposition on to polymer processing equipment during processing.

All percentages described in this document shall refer to the percentage on a weight basis.

It has surprisingly been found that the masterbatch compositions of the invention provide for a high-concentration liquid phosphite masterbatch with improved shelf-life. Improved shelf life, in the scope of this invention, means that the masterbatch exhibits reduced blooming of the additive to the surface of the masterbatch and reduced hydrolysis of the liquid phosphite component during storage of the masterbatch.

Liquid phosphite antioxidants of the present invention are liquids at temperatures of less than 60 °C. Preferred liquid phosphite antioxidants of the present invention are liquids at temperatures of less than 50 °C. Most preferred liquid phosphite antioxidants of the present invention are liquids at ambient conditions of 23 °C. Liquid phosphite antioxidants of the present invention are used for providing stabilization to polyolefins, as is known in the art. Examples of liquid phosphite antioxidants (liquid phosphites) of the present invention include triaryl phosphites, trialkyl phosphites, mixtures of triaryl and trialkyl phosphites, and alkylphenol-free liquid polymeric polyphosphites.

More particularly, liquid phosphites of the present invention include the reaction mass of bis[2,4-bis(2-methylbutan-2-yl)phenyl] 4-(2-methylbutan-2-yl)phenyl phosphite and 2,4-bis(2-methylbutan-2-yl)phenyl bis[4-(2-methylbutan-2-yl)phenyl] phosphite and tris[4-(2-methylbutan-2-yl)phenyl] phosphite, which is sold under CAS number 939402-02-5; this mixture is alternately referred to as phosphorous acid, mixed 2,4-bis(1,1-dimethylpropyl)phenyl and 4-(1,1-dimethylpropyl)phenyl triesters. Also suitable is tris(p-tert-pentylphenyl) phosphite (CAS # 864-56-2).

Liquid phosphites suitable for practising the present invention also include tri(alkylaryl) liquid phosphite antioxidants as claimed in US 7,888,414, liquid phosphites produced under the tradename Weston® 705T by SI Group, alkylphenol-free liquid polymeric polyphosphites as claimed in US 8,563,637, and US 8,981,042 and liquid polymeric polyphosphites produced under the tradenames Doverphos® LGP11 and Doverphos® LGP12 by Dover Chemical.

It should be noted that it is a common practice to add a small amount of an acid neutralizer such as triisopropanolamine (TIPA) as a minor component to liquid phosphites. TIPA is an organic acid-neutralizer and not the inorganic solid coadditive of the present invention. TIPA may or may not be present as an optional additive of the present invention.

Inorganic solid coadditives of the present invention are inorganic solids capable of performing as acid neutralizers. Acid neutralizing coadditives of the present invention include metal oxides of calcium and zinc as well as hydrotalcite and hydrotalcite-like minerals. Such acid neutralizing coadditives are known in the art as additives in polyolefins. Acid-neutralizing coadditives of the present invention are preferably of a particle size suitable for dispersion into polyolefins. They may optionally be surface treated in order to aid dispersion into a polymer.

Specific examples of inorganic, acid neutralizing coadditives of the present invention include hydrous hydrotalcite, anhydrous hydrotalcite and hydrotalcite-like minerals. Specific examples of hydrous hydrotalcite and hydrotalcite like minerals include Kisuma DHT-4A, Kisuma DHT-4V, Kisuma ZHT-4V, Kisuma DHT-4A-2, Clariant Hycite 713, Doobon CLC-120, and GCH Sipax AC-207.

Calcined anhydrous hydrotalcites are also suitable. Specific examples of calcined anhydrous hydrotalcite include Kisuma DHT-4C. Also suitable is zinc oxide, specific examples of which include American Zinc Recycling Kadox 911, US Zinc AZO 77HSA and Zochem Zoco 102USP. Calcium oxide is also suitable, specific examples of which include Omya Caloxol CP2F.

Blends or combinations of any of the above examples are also suitable for use as the inorganic solid coadditive of the present invention.

Most preferably, the acid neutralizing coadditives of the present invention can also absorb water. Without wishing to be constrained by theory, the incorporation of such additives, may allow the trapping of any small amounts of water present or migrating into the masterbatch. Trapping of the water may make it unavailable to hydrolyze the liquid phosphite.

The immiscible polymer blend of the invention comprises a first carrier comprising a polyethylene or polyethylene copolymer with a density greater than about 0.910 $g/cm^3$ or an isotactic homopolymer polypropylene or polypropylene impact copolymer with a density greater than about 0.898 $g/cm^3$ or a blend or combination thereof; and a second carrier comprising a polyolefin or polyolefin copolymer with a density less than about 0.895 $g/cm^3$ or an ethylene-vinyl acetate copolymer or an acid copolymer or a blend or combination thereof. Immiscible Polymer Blends that serve as the carrier polymer of the masterbatch of the present invention are immiscible in the solid state. The polymers of the blend are immiscible and form either a disperse morphology or a co-continuous morphology in the solid state. The formation of a dispersed morphology wherein the second carrier is dispersed in the first carrier matrix is preferable. However, the formation of a co-continuous structure between the two immiscible polymers is also possible. The formation of a dispersed morphology wherein the first carrier is dispersed in the second carrier matrix is also possible, where the concentration of the first carrier is still relatively high, but this is not the most preferred morphology of the present invention. No determination has been made as to whether or not the polymers of the blend composition are miscible or immiscible during processing at higher temperatures in the molten state during the process of preparing the masterbatch by compounding. It is understood that miscibility of polymers is dependent on factors including the nature of the polymers, their relative concentrations as well as temperature and pressure of the system.

The polymers of the immiscible polymer blend are chosen as follows. The First Carrier of the Immiscible Polymer Blend is comprised of a single polyolefin or blend of polyolefins. This First Carrier is characterized by a solubility of the liquid phosphite in the First Carrier of less than 9%, preferably less than 8%, and most preferably less than 6% at 45 °C. Examples of polymers suitable as the First Carrier will preferably form the continuous phase in a disperse morphology or a co-continuous phase in a co-continuous phase of the Immiscible Polymer Blend of the current invention.

Examples of the First Carrier of the Immiscible Polymer Blend of the current invention include branched low density polyethylene (LDPE) with a density of 0.91 to 0.94 $g/cm^3$. Examples of such LDPEs include LyondellBasell Petrothene NA219000.

Substantially linear polyolefins and linear alpha-olefin copolymers are also suitable for practising the invention. These include substantially linear polyethylene and polyethylene copolymers covering the range of densities from 0.91 to 0.965 $g/cm^3$ inclusive.

Such linear polyethylenes and polyethylene copolymers include linear low density polyethylenes (LLDPE) including butene, hexene, octene or other low alpha-olefin copolymers of polyethyelene with a density in the range of 0.91 to 0.925 $g/cm^3$. Examples of such LLDPEs include LyondellBasell Petrothene GA502024.

Medium density polyethylenes (MDPE) including butene, hexane, octene or other low alpha-olefin copolymers of polyethyelene with a density in the range of 0.926 to 0.940 $g/cm^3$ are also suitable for practising the invention. Examples of such an MDPE includes ExxonMobil Chemical LL8555.25.

Also suitable are high density polyethylene (HDPE) including HDPE homopolymers, as well as, butene, hexene, octene or other short-chain alpha-olefin copolymers of polyethylene with a density equal to or greater than 0.941 $g/cm^3$. Examples of such a HDPE resin includes ExxonMobil Chemical HDPE HD6706.17 and Nova Chemicals Surpass® CCs757-A. Preferably the substantially linear polyethylene is characterized by a low water vapour transmission rate (WVTR) relative to the second carrier.

Also suitable are semi-crystalline polypropylenes including isotactic homopolymer polypropylene with a density greater than 0.898 $g/cm^3$ and heterogeneous ethylene-propylene copolymers, also known as impact copolymers with a density greater than 0.898 $g/cm^3$. Homopolymer polypropylenes are preferred. Preferably the homopolymer polypropylene will have a density of 0.90 $g/cm^3$ or greater. Examples of such homopolymer polypropylenes include LyondellBasell's Pro-fax 6301, Braskem's FF030F2, and ExxonMobil Chemical's PP1105E1. An example of an impact copolymer useful in the present invention includes LyondellBasell's Purell EP274P.

The Second Carrier of the immiscible polymer blend of the present invention comprises polyolefins, polyolefin copolymers, or ethylene-vinyl acetate copolymers (EVAc) or blends thereof, which, when mixed into the First Carrier in sufficient concentration, form a second immiscible phase. The second carrier preferably forms an immiscible dispersed phase in a disperse morphology or an immiscible co-continuous phase in a co-continuous morphology of the Immiscible Polymer Blend. The Second Carrier is further characterized as having a solubility of the liquid phosphite of greater than 11%, preferably more than 12% and most preferably higher than 13% at a temperature of 45 °C. Second carriers of the present invention are typically characterised by a high amorphous content and low crystallinity compared to the first carrier.

Examples of suitable polymers for the Second Carrier of the polymer carrier blend include ethylene-propylene copolymers. Preferred ethylene-propylene copolymers of the present invention have a density of less than 0.895 g/cm$^3$ and a Melt Flow Rate (MFR) (ASTM D1238-13 at 190 °C and 2.16kg) of between 0.2 and 100.0 g/10 min. More preferred ethylene-propylene copolymers of the present invention have a density of less than 0.88 g/cm$^3$ and a MFR (190 °C, 2.16kg) of between 0.5 and 50 g/10 min. Examples of suitable ethylene-propylene copolymers include Vistamaxx™ 3000, 3020FL, 6102, 6202 and 6502.

Ethylene-vinyl acetate copolymers (EVAc) are also suitable polymers for the second carrier. Preferred EVAC polymers have an MFR of 0.2 to 50 g/10 min. Examples of EVAC polymers of the present invention include ExxonMobil EscoreneTM LD768.MJ.

Also suitable as the second carrier of the invention are ethylene-alpha olefin copolymers. Ethylene-alpha olefin copolymers of the present invention have a density of less than 0.905 g/cm$^3$ and more preferred ethylene-alpha olefin copolymers have a density of less than 0.895 g/cm$^3$ and a MFR of 0.2 to 50 g/10 minutes. Examples of ethylene-alpha olefins suitable for the present invention include ExxonMobil's plastomers such as Exact 8201 and Exact 4059 and Dow's Engage™ polyolefin elastomers such as Engage™ XLT8677.

Acid copolymers such as ethylene acrylic acid copolymers and ethylene methyl acrylate copolymers are also suitable for practising the invention.

The range of polymers that comprise the First Carrier and Second Carrier, as above, must be chosen with reference to one another and with a range of concentrations to, in fact, form an immiscible polymer blend. The First Carrier is preferably present at a ratio of 20:1 to 2:3 with reference to the Second Carrier. More preferably the First Carrier is present at a ratio of 15:1 to 3:2 with reference to the Second Carrier. In the case of any doubt, the formation of an immiscible polymer blend can be demonstrated by means known to one skilled in the art by various techniques including microscopy.

Preferably, the immiscible polymer blend is a compatible polymer blend, where the First Carrier and Second Carrier are characterized by good compatibility.

It is preferable for the carrier polymers of the masterbatch of the present invention to be compatible with the base polymer it is to be let down into. It is most preferable for the First Carrier of the masterbatch to be closely matched with or even identical to the base polymer it is to be let down into. By way of an example, if the masterbatch of the present invention was to be used to provide antioxidizing stabilization to a film grade LLDPE of, for example, 0.918 g/cm$^3$ density and an MFR of 1.0 g/10 min, it would be preferable for the Immiscible Polymer Blend, which acts as the carrier of the masterbatch, to comprise a First Carrier of an LLDPE of similar density and MFR.

It is also preferable for the Second Carrier polymer of the masterbatch of the present invention to be compatible with the base resin that it will be letdown into. Even more preferably the Second Carrier, although immiscible with the First Carrier of the masterbatch of the present invention at the concentration used in the masterbatch, is completely miscible at the lower concentration of use in the Base Polymer, such that it does not exist as a separate phase in the base polymer. This is, however, not necessary for the successful application of the present invention. If the Second Carrier, upon addition to the base polymer, exists as a separate dispersed phase, it is preferable that the dispersed phase size should be small enough that it will not cause a readily visible defect. This can be facilitated by ensuring that the domain size of the Second Carrier in the liquid phosphite masterbatch is well dispersed before it is let down into the base polymer. Preferably the Second Carrier exists as a dispersed phase with a diameter of less than 100 microns in the masterbatch in order to facilitate good dispersion into the base polymer. More preferably the Second Carrier has a dispersed phase diameter of less than 10 microns in the masterbatch. Most preferably the Second Carrier has a dispersed phase diameter of less than 5 microns.

Without wishing to be constrained by theory, it is believed that use of the immiscible polymer blend of two polymers as the carrier for the liquid phosphite antioxidant in the masterbatch of the present invention provides for both high uptake of the liquid phosphite in the Second Carrier, and reduced migration and blooming of the liquid phosphite to the surface of the pellet through the First Carrier, which is characterized by lower solubility of the liquid phosphite and higher crystallinity than the Second Carrier. For this reason, it is believed that a disperse phase morphology where the Second Carrier is completely encapsulated by the First Carrier, is preferable. However, it has been found that a co-continuous morphology of the First and Second carriers works very well. In addition, it is believed that a First Carrier with a low WVTR (lower than the disperse phase) acts as a barrier between the environment and the liquid phosphite concentrated in the dispersed phase, and thereby limits or substantially decreases the ingress of water and thus the rate of hydrolysis of the liquid phosphite. The addition of the acid-neutralizing coadditive is believed to neutralize any initial acidic hydrolysis products of the liquid phosphite and thereby reduce or delay further hydrolysis of the liquid phosphite antioxidant. The preferred use of a dry inorganic material as the acid-neutralizing coadditive may also allow for the beneficial trapping of small amounts of moisture and thereby reduce or delay hydrolysis of the phosphite. The most preferred use of a calcined hydrotalcite appears to considerably reduce or delay hydrolysis of the liquid phosphite.

Again, without wishing to be constrained by theory, it is known that within a class of materials, for example, linear polyethylene, solubility of the liquid phosphite is inversely correlated with the density and percent crystallinity of the polymer. For example, a higher density polyethylene will have a higher crystalline content and thus lower amorphous content than a lower density polyethylene. The higher density, and thus lower amorphous content will generally be correlated with a lower solubility of the liquid phosphite. The higher density of a linear polyethylene will also generally be correlated with a lower diffusion coefficient of the liquid phosphite and a lower WVTR. As there can be other effects on solubility, diffusion, and WVTR including crystalline morphology, the First and Second carriers have been defined by solubility of the liquid phosphite.

## Examples

The solubilities of liquid phosphite antioxidants suitable for practising the present invention were measured in several polymers.

Seven grades of polymers relevant to the current invention, encompassing a range of densities, MFRs, structures and monomers, were selected for testing. Surpass® CCs757-A (HDPE) was obtained from NOVA Chemicals (Calgary, Alberta). Petrothene GA502024 (LLDPE) and Petrothene NA21900 (LDPE) were obtained from LyondellBasell Industries (Houston, USA). Vistamaxx™ 6502 (ethylene-propylene copolymer) and Escorene™ Ultra LD 768.MJ (EVAc) were obtained from ExxonMobil Chemical Corporation (Houston, USA). Engage™ XLT 8677 (ethylene-octene copolymer) and Versify™ 4301 were obtained from The Dow Chemical Company (Michigan, USA). A summary of key properties of the tested polymers can be found in Table 1.

The solubilities of liquid phosphite antioxidants Weston® 705T, Doverphos™ LGP11 and Doverphos™ LGP12 were measured in each of the polymers.

Solubility testing was carried out according to the following procedure.

The pellets of each of the 7 polymers in Table 1 were compression molded into thin films according to Procedure C of Annex A1 in ASTM D4703-16. All the resins were compression molded at a temperature of 218 °C, and cooled according to Procedure C. The compression molded films were cut using an Arbor Press into samples of dimensions 38.00 mm x 12.00 mm x 0.13 mm (thickness). A minimum of five samples from each polymer grade were prepared for each liquid phosphite tested. Separate glass jars were filled to within 5 mm of the top of the jar with either Weston® 705T (W705T), Doverphos™ LGP11 or Doverphos™ LGP12. Samples of the different polymer films were suspended separately using stainless steel hangers so that they were in contact with the liquid antioxidant on all sides. The headspace of the jar was filled with dry nitrogen and the jars were carefully sealed in order to prevent hydrolysis of the liquid phosphite. Each set of polymer films was tested separately in its own jar with each liquid phosphite, as shown in Table 1. 6 of the polymer films were tested separately in the three different liquid phosphites, and 1 polymer film was tested in Weston 705T and LGP12 but not LGP11, for a total of 20 sets of data, each consisting of a minimum of 5 repeats.

The samples were aged in an oven at 45 °C and removed at regular intervals of time for gravimetric and FTIR testing. The samples were first wiped carefully and gently with a cloth soaked with acetone in order to remove any liquid phosphite on the surface of the film and then gently dried with a paper towel. The samples were then weighed and then tested by Fourier Transform Infrared Spectroscopy (FT-IR) in transmission mode. FTIR was used to confirm that the absorbed liquid phosphites had not hydrolyzed or oxidized. The concentration of the absorbed liquid phosphite in the samples was determined gravimetrically.

Tested samples were returned to the jars of liquid phosphite, the headspace was again blanketed in dry nitrogen and exposure was continued at 45 °C in the oven. The time the samples spent outside of the oven for testing was minimized. Samples were removed and tested at regular intervals in this manner until the completion of the testing regime. The testing interval was daily for the first week, every other day for the following week, then weekly for the remainder of the first month and then biweekly until the completion of testing. Completion of the testing regime varied for each polymer-liquid phosphite pair and was determined based on when the system reached equilibrium - meaning that the polymer film no longer gained weight in a minimum of three successive testing intervals. High-performance liquid chromatography (HPLC) was carried out on the liquid phosphite remaining in the jars at the end of the testing regime. HPLC results provided additional confirmation that the liquid phosphite did not hydrolyze during the course of the testing regime.

The results in Table 1 show that Petrothene NA219000 (an LDPE), Petrothene GA502024 (an LLDPE) and Surpass® CCs-757 (an HDPE) are suitable polymers for the First Carrier of the present invention. Weston® 705T has a solubility of less than 5%, Doverphos™ LGP11 has a solubility of less than 3%, and Doverphos™ LGP12 has a solubility of less than 8% in these First Carrier polymers at 45 °C.

The results also show that the Vistamaxx™ 6502, Engage™ XLT 8677, Escorene™ Ultra LD 768.MJ and Versify™ 4301 show much higher solubilities of the liquid phosphites. These three polymers were listed as suitable polymers for the Second Carrier of the immiscible polymer blend of the masterbatch of the present invention. Doverphos LGP11 has a solubility of greater than 12% in Vistamaxx™ 6502, Engage™ XLT 8677, and Escorene™ Ultra LD 768.MJ. Doverphos LGP12 has a solubility of greater than 17% in Vistamaxx™ 6502, Engage™ XLT 8677, Escorene™ Ultra LD 768.MJ, and Versify™ 4301. Weston 705T has a solubility of greater than 30% in Vistamaxx™ 6502, Engage™ XLT 8677, Escorene™ Ultra LD 768.MJ, and Versify™ 4301.

This data is useful in consideration of the subsequent examples and comparative examples of the present invention. It is understood that solubility data is dependent on the method of preparation of the polymer films because, for example, the rate of cooling or annealing can affect the crystalline structure and crystalline content of semi-crystalline polymers. Thus the presented data has been repeated under the controlled conditions described herein and accurately reflects the solubility of the liquid phosphites under these described conditions.

Table 1

| Polymer | Type | MFI * ($\frac{g}{10\ min}$) | Density * ($\frac{g}{cm^3}$) | Crystallinity ** (%) | W705T solubility *** (%) | LGP11 solubility *** (%) | LGP12 solubility *** (%) |
|---|---|---|---|---|---|---|---|
| Surpass® CCs-757 | HDPE | 7.0 | 0.957 | 65 | 3.1 ±0.36 | 2.4 ±0.29 | 7.5 ±1.59 |
| Petrothene GA502024 | LLDPE | 2.0 | 0.918 | 20 | 4.7 ±0.43 | 1.9 ±0.14 | 5.9 ±1.40 |
| Petrothene NA219000 | LDPE | 10.0 | 0.923 | 30 | 3.4 ±0.22 | 2.1 ±0.26 | 6.3 ±1.11 |
| Vistamaxx™ 6502 | Propyleneethylene copolymer | 21.0 | 0.865 | - | 44.1 ±0.48 | 12.6 ±0.25 | 22.1 ±1.86 |
| Versify™ 4301 | Propyleneethylene copolymer | 25.0 | 0.868 | 1.3 | 31.8 ±0.67 | N/A | 18.0 ±0.83 |
| Engage™ XL T 8677 | Ethylene-Octene copolymer | 0.5 | 0.870 | 8 | 44.9 ±0.64 | 12.9 ±0.27 | 23.6 ±0.25 |
| Escorene™ Ultra LD 768.MJ | EVA copolymer | 2.3 | 0.952 | Not calculated | 51.5 ±0.66 | 12.9 ±0.20 | 17.4 ±0.68 |

\* MFR and density values are quoted from suppliers' datasheets.

\*\* % Crystallinity was estimated by Differential Scanning Calorimetry (DSC). The percent crystallinity was calculated based on the measured enthalpy and a theoretical heat of fusion for a 100% crystalline polyethylene (293 J/g).

\*\*\* Solubility was calculated as:

$$S = ((W_F - W_I) / W_F) \times 100$$

Where, S = Solubility in %; $W_F$ = final weight of the exposed sample; $W_I$ = initial weight of the polymer film.

Solubility values were not corrected for crystallinity.

The solubility values represent an average of five samples. The standard deviation of the five samples is reported as the $\pm$ value.

A masterbatch composition according to the invention (Example E10) was prepared according to the following procedure.

6.6 lbs of HDPE (Nova Chemicals Surpass® CCs757-A) as the First Carrier, 2.0 lbs of an ethylene-propylene elastomer (ExxonMobil Chemical Company Vistamaxx™ 6502) as the Second Carrier, 1.0 lbs of liquid phosphite antioxidant (SI Group, Weston® 705T) and 0.4 lbs of dehydrated hydrotalcite (Kyowa Chemical Industry Company DHT-4C) as the acid neutralizing coadditive were compounded on a Coperion ZSK30 mm, 36 length/diameter (L/D) twin-screw extruder equipped with a high-shear mixing screw, as is known in the art. Surpass® CCs757-A (HDPE) was received in pellet form and was ground to a 12 Mesh top size prior to compounding. The Vistamaxx™ 6502 was not ground and was used in pellet form as received. The HDPE, elastomer and hydrotalcite were pre-weighed, dry blended and dosed to the extruder via a loss-in-weight feeder, as is known in the art. The loss in weight feeder doses the extruder indirectly, through a vertical auger which is fitted closely to the end of the loss in weight feeder and to the feed throat of the twin screw extruder. The liquid phosphite antioxidant was fed via a calibrated liquid feeder, directly to the vertical auger. The vertical auger was also fitted to allow for the addition of gaseous nitrogen at a volume sufficient to substantially displace air and any associated humidity from the feed to the extruder.

The extruder conditions were set to run at 250 RPM, with barrel zone temperatures of 100 °C in the feed zone increasing zone by zone to 180 °C in the last barrel zone and extrusion die. The measured temperature of the melt was 179 °C at the exit of the extruder. Pellets were formed on an underwater pelletizer and dried by a spin dryer as is known in the art. The masterbatch pellets were found to have a moisture content of less than 0.1%. The pellets were dry to the touch and free flowing.

It should be noted that the foregoing compounding method in a twin-screw extruder represents a common method of preparing masterbatches, but is by no means the only method known in the art. Masterbatches of the current invention could be made on twin screw extruders with different feeding and dosing methodologies known in the art, and could be made on other compounding equipment known in the art.

Approximately 200 grams of masterbatch pellets were exposed, uncovered in a petri dish in an environmental chamber under conditions of 45 °C and 80% relative humidity (RH). Samples were removed periodically, ground for ultrasonic extraction in cyclohexane and tested for Weston® 705T content by HPLC. HPLC quantification was carried out on a Waters 2695, equipped with a Nova-Pak C18, 4 $\mu$m, 3.9x150 mm (Part No. WAT086344) column and a Waters 2487 UV-Vis detector and using an ethanol, methanol, isopropyl alcohol, and water mixture as the mobile phase. A calibration curve for quantification was developed using the same lot of W705T used for the production of the masterbatch. The calibration curve fit showed a correlation coefficient of >0.999 and relative standard deviation of <1%. It should be noted that active (unexposed, unhydrolyzed, unoxidized) Weston® 705T exhibits 4 distinct peaks representing different components of the liquid phosphite. Any reduction in content of measured Weston® 705T peaks over time in the exposed samples could be quantified and ascribed to hydrolysis or other unwanted reactions of the Weston® 705T components.

The results showing the active Weston® 705T content in the masterbatch sample E10 as a function of time are found in Table 2. The masterbatch sample E10 was found to have good hydrolytic stability. After 98 days of exposure at 45 °C and 80% RH, more than 85% of the original Weston® 705T was still active.

Sample E10 was dry blended at 1.2% letdown with 98.8% of Nova Chemicals Novapol® PF-0118-A LLDPE. This dry blend was extruded on a Lung-Meng LM/AH42-MI blown film line fitted with a single layer 4-inch die with 2.7mm die gap. 50-micron film was blown and compared visually for gels with a reference film of 100% Novapol® PF-0118-A resin produced under identical conditions. The purpose of this comparison was not to compare the stabilization provided by the antioxidant (base resin is already stabilized) but to understand if the First or Second Carrier resins would contribute to gels in the film. The comparison showed no difference in the level of gels in the two films.

For purposes of comparison, masterbatch compositions comprising neither a second carrier nor an inorganic solid coadditive (Comparative Examples CE1, CE2, and CE3) were prepared as follows.

0.5 lbs of Weston® 705T was compounded with 9.5 lbs of Surpass® CCs757-A (ground to 12 mesh), Petrothene GA502024 (ground to 12 mesh top size) and Petrothene NA 219000 (ground to 12 mesh) to produce masterbatches labelled as CE1, CE2 and CE3 respectively. A second, immiscible carrier was not used, nor was an acid neutralizing coadditive. Compounding and testing procedures were carried out according to the method described for Example E10.

Results are tabulated in Table 2. Even at 5% loading of liquid phosphite the CE1, CE2, and CE3 masterbatches exhibited poor shelf life, as indicated by the rapidly decreasing active content of liquid phosphite measured by HPLC. In addition, the CE1 and CE3 pellets already felt slightly sticky and greasy to the touch, respectively, at the time of manufacture, indicating incomplete incorporation of the liquid phosphite or rapid migration of the liquid phosphite to the surface of the pellets.

**Table 2**

| Formulations (wt%) | Example | Comparative Examples | | |
|---|---|---|---|---|
| | E10 | CE1 | CE2 | CE3 |
| Surpass® CCs757-A (HDPE, ground) | 66.0% | 95.0% | | |
| Petrothene GA502024 (LLDPE, ground) | | | 95.0% | |
| Petrothene NA 219000 (LDPE, ground) | | | | 95.0% |
| Vistamaxx™ 6502 (pellet) | 20% | | | |
| Weston® 705T | 10.0% | 5.0% | 5.0% | 5.0% |
| DHT-4C | 4.0% | | | |
| Results | E10 | CE1 | CE2 | CE3 |
| Pellet feel to touch at Time zero | dry | slightly sticky | dry | greasy |
| Active phosphite content (%) as measured by HPLC after exposure at 45 °C and 80% RH | | | | |
| Day 0 | 9.9% | 5.1% | 5.4% | 5.5% |
| Day 7 | 8.5% | 0% | 0% | 0% |
| Day 35 | 8.2% | - | - | - |
| Day 98 | 8.5% | - | - | - |

Masterbatch compositions omitting essential components of the invention in turn (Comparative Examples CE7, CE21, CE22, CE26) were prepared as detailed below.

Comparative Example CE7 was prepared with neither a second carrier nor an inorganic solid coadditive. Comparative Example CE21 was prepared without an inorganic solid additive. Comparative Example CE22 was prepared without a second carrier. Comparative Example CE26 was prepared without a first carrier.

10 lbs of comparative masterbatch compositions CE7, CE21 and CE22 were prepared according to the formulations in Table 3. CE7 was prepared as a comparative example incorporating 10% Weston® 705T in HDPE (Surpass® CCs757-A). CE21 was prepared as a comparative example incorporating 10% Weston® 705T in an immiscible blend of Vistamaxx™ 65502 and HDPE (Surpass® CCs757-A). CE22 was prepared as a comparative example incorporating 10% Weston® 705T and 4% DHT-4C in HDPE (Surpass® CCs757-A). CE26 was prepared as a comparative example incorporating 10% Weston® 705T and 4% DHT-4C in Vistamaxx™ 6502. In this way the effects of the First Carrier (Surpass® CCs757-A), Second Carrier (Vistamaxx™ 6502) and acid neutralizing coadditive (DHT-4C) could be assessed independently.

Compounding and testing procedures were carried out according to the method described in Example E10.

Testing results are also found in Table 3 and compared to those of Example E10.

Comparative Example CE7 shows that a masterbatch of 10% Weston® 705T in the Surpass® CCs757-A HDPE does not show good initial incorporation of the liquid phosphite, and the active liquid phosphite is fully consumed within a week of exposure to humid, warm conditions.

Comparative Example CE21 shows that the addition of the more amorphous Vistamaxx™ 6502 as a second carrier improves the initial incorporation of the liquid phosphite as shown by visual and tactile observation. However, the active liquid phosphite is fully hydrolysed within a week of exposure to humid, warm conditions.

Comparative Example CE22 shows that the addition of the DHT-4C acid neutralizer does not improve the initial incorporation of the liquid phosphite as evidenced by visual and tactile observation, however, it considerably improves the stability of the masterbatch in warm humid conditions. The Weston® 705T is progressively consumed, but at a reduced rate as compared to Example CE21, and at a faster rate than example E10.

Comparative Example CE26 shows that the preparation of a 10% Weston® 705T masterbatch with 4% DHT-4C in the highly amorphous Vistamaxx™ 6502 carrier provided an initially dry sample. However, the masterbatch did not provide for good shelf stability and the Weston® 705T component hydrolyzed to 50% of its original content within 28 days.

Comparing CE7, CE21, CE22 and CE26 results with Example E10 we see that the use an immiscible polymer blend of two components exhibiting a disperse morphology as shown in Figure 1, comprising a First Carrier characterized by a relatively lower solubility of the liquid phosphite and a dispersed Second Carrier characterized by a relatively higher solubility of the liquid phosphite, in combination with the use of an acid neutralizing coadditive, provides for the best incorporation and hydrolytic stability of the liquid phosphite.

**Table 3**

| Formulations (wt%) | Example E10 | Comparative Examples | | | |
|---|---|---|---|---|---|
| | | CE7 | CE21 | CE22 | CE26 |
| Surpass® CCs757-A (ground) | 66% | 90% | 70% | 86% | 0% |
| Vistamaxx™ 6502 (pellet) | 20% | | 20% | | 86% |
| Weston® 705T | 10% | 10% | 10% | 10% | 10% |
| DHT-4C | 4% | 0% | 0% | 4% | 4% |
| Results | | | | | |
| Pellet feel to touch at Time zero | dry | greasy | slightly tacky | greasy | dry |
| Active phosphite content (%) as measured by HPLC after exposure at 45 °C and 80% RH | | | | | |
| Day 0 | 9.93 | 9.39 | 10.5 | 10.62 | 7.24 |
| Day 7 | 8.53 | 0 | 0 | 8.21 | 6.87 |
| Day 14 | | | | 7.16 | 7.38 |
| Day 21 | | | | 5.58 | |
| Day 28 | | | | 4.75 | 3.81 |
| Day 35 | 8.19 | | | | |
| Day 42 | | | | 3.58 | |
| Day 70 | | | | 0.85 | |
| Day 98 | 8.54 | | | | |
| Day 120 | | | | | |

Examples E9, E18, and E24 and Comparative Example CE8 were prepared with various polymers (in varying amounts) acting as the second carrier.

Compositions were prepared for compounding according to the formulations in Table 4. Compounding and testing procedures were carried out according to the method described in Example E10. Results are also tabulated in Table 4.

The recipes of E9 use a lower percentage of the second carrier polymer Vistamaxx™ 6502 as compared to E10. This led to a small amount of initial blooming on compounding. However, the formulation exhibited good resistance to hydrolysis on exposure to a warm humid environment.

Example E18 demonstrates the successful application of Engage™ XLT8677 as an alternative relatively lower density Second Carrier polymer. The masterbatch exhibits some initial blooming on compounding but exhibits good resistance to hydrolysis on exposure to a warm humid environment.

Example E24 demonstrates the successful use of Escorene™ LD768.MJ (an EVAC polymer) as an alternative Second Carrier polymer used in combination with the Surpass® CCs757-A First Carrier polymer. The masterbatch exhibits no discernable blooming, good incorporation of the liquid phosphite and excellent resistance to hydrolysis on exposure to a warm humid environment.

Comparative Example CE8 demonstrates that Petrothene NA219000 (LDPE) is not a suitable Second Carrier of the present invention.

**Table 4**

| Formulations | Comparative Example | Examples | | | |
|---|---|---|---|---|---|
| | CE8 | E9 | E10 | E18 | E24 |
| Surpass® CCs757-A (HDPE, ground) | 76% | 76% | 66% | 66% | 60% |
| NA 219000 (10 MI, .923 LDPE, ground) | 10% | | | | |
| Vistamaxx™ 6502 (pellet) | | 10% | 20% | | |
| Engage™ XLT8677 (pellet) | | | | 20% | |
| Escorene™ LD768.MJ (pellet) | | | | | 20% |
| Weston® 705T | 10% | 10% | 10% | 10% | 10% |
| DHT-4C | 4% | 4% | 4% | 4% | 4% |
| Results | | | | | |
| Pellet feel to touch at Time zero | greasy | slightly greasy | dry | greasy | dry |
| Active phosphite content (%) as measured by HPLC after exposure at 45 °C and 80% RH | | | | | |

(continued)

| Results | | | | | |
|---|---|---|---|---|---|
| Day 0 | 10.48 | 10.8 | 9.93 | 9.1 | 10.29 |
| Day 7 | 9.8 | 9.76 | 8.53 | 11.12 | 10.38 |
| Day 14 | | | | | 10.31 |
| Day 21 | | | | | |
| Day 28 | | | | | 10.47 |
| Day 35 | 6.1 | 8.26 | 8.19 | 9.94 | |
| Day 42 | | | | | 10.36 |
| Day 70 | | | | | 10.22 |
| Day 98 | 0.65 | 9.93 | 8.54 | 10.92 | |
| Day 120 | | | | | |

Examples E11, E23, E41, and E53 were prepared with various polymers acting as the first carrier.

Compositions were prepared for compounding according to the formulations in Table 5 in order to show the effect of different polymers as the First Carrier of the masterbatch of the current invention. Compounding and testing procedures were carried out according to the method described in Example E10. Results are also tabulated in Table 5.

E11, E41, and E53 showed no discernable blooming at the time of compounding. These masterbatches use substantially linear HDPE and MDPE and branched LDPE polymers respectively. E23 showed small levels of initial blooming on compounding. E23 uses a substantially linear LLDPE polymer. On exposure to a warm humid environment each of E11, E23, E41, and E53 showed good resistance to hydrolysis of the Weston® 705T component.

**Table 5**

| Formulations | Examples | | | | |
|---|---|---|---|---|---|
| | E10 | E11 | E23 | E41 | E53 |
| Surpass® CCs757-A (HDPE, ground) | 66% | | | | |
| HD6706 (6.7 MI, .952 HDPE, ground) | | 66% | | | |
| GA502024 (2 MI, .918 LLDPE, ground) | | | 66% | | |
| NA 219000 (10 MI, .923 LDPE, ground) | | | | | 66% |
| LL8555.25 (6.8 MFR, .936, h-LLDPE, ground) | | | | 66% | |
| Vistamaxx™ 6502 (pellet) | 20% | 20% | 20% | 20% | 20% |
| Weston® 705T | 10% | 10% | 10% | 10% | 10% |
| DHT-4C | 4% | 4% | 4% | 4% | 4% |
| Results | | | | | |
| Pellet feel to touch at Time zero | dry | dry | very slight stickiness | dry | dry |
| Active phosphite content (%) as measured by HPLC after exposure at 45 °C and 80% RH | | | | | |
| Day 0 | 9.93 | 9.33 | 9.97 | 9.50 | 9.68 |
| Day 7 | 8.53 | 7.69 | 9.39 | 9.68 | 9.67 |
| Day 14 | | | 9.85 | 9.61 | |
| Day 21 | | | | | |
| Day 28 | | | 9.41 | 9.98 | 9.59 |
| Day 35 | 8.19 | 6.73 | | | |
| Day 42 | | | 9.72 | 9.78 | |
| Day 58 | | | | | 9.42 |
| Day 70 | | | 9.22 | 9.59 | |
| Day 98 | 8.54 | 7.93 | | | |
| Day 120 | | | | | |

Examples E30, E32, E33, and E54 and Comparative Examples CE34 and CE38 were prepared with various inorganic solid coadditives.

Compositions were prepared for compounding according to the formulations in Table 6 in order to show the effect of different acid neutralizing coadditives in the masterbatch. Compounding and testing procedures were carried out according to the method described in Example E10. Results are also tabulated in Table 6.

Example E30 demonstrates the successful application of Zinc oxide as the acid neutralizer of the present invention. The formulation showed no discernable blooming at the time of compounding, pellets felt dry and free flowing to the touch and on exposure to a warm humid environment the Weston® 705T did not hydrolyze within 98 days.

Example E32 demonstrates the successful application of a blend of Zinc oxide and DHT-4C as the acid neutralizer of the present invention. The formulation showed no discernable blooming at the time of compounding, pellets felt dry and free flowing to the touch and on exposure to a warm humid environment the Weston® 705T did not hydrolyze within 70 days.

Example E33 demonstrates the successful application of a blend of Zinc oxide and DHT-4V as the acid neutralizer of the present invention. The formulation showed no discernable blooming at the time of compounding, pellets felt dry and free flowing to the touch and on exposure to a warm humid environment the Weston® 705T did not hydrolyze within 70 days.

Example E54 demonstrates the successful application of DHT-4V as the acid neutralizer of the present invention. The formulation showed no discernable blooming at the time of compounding; pellets felt dry and free flowing to the touch and on exposure to a warm humid environment the Weston® 705T did not hydrolyze within 58 days.

Comparative example CE34 shows the zinc stearate has a negative effect as an additional additive in the composition of the current invention. More than 80% of the original Weston® 705T content was hydrolyzed within 70 days of exposure to a warm humid environment.

Comparative example CE38 shows the unsuccessful application of zinc stearate as an acid neutralizer in the composition of the current invention. Zinc stearate is not an inorganic mineral, acid neutralizing coadditive as described in the current invention. More than 70% of the original Weston® 705T content was hydrolyzed within 28 days of exposure to a warm humid environment.

In aggregate, these Examples show the beneficial application of certain inorganic mineral additives as acid neutralizing coadditives of the present invention. Comparative examples show the unsuccessful use of zinc stearate, as a replacement to the acid neutralizing coadditive of the present invention.

**Table 6**

| Formulations | Examples | | | | | Comparative Examples | |
|---|---|---|---|---|---|---|---|
| | E10 | E30 | E32 | E33 | E54 | CE34 | CE38 |
| Surpass® CCs757-A (HDPE, ground) | 66% | 66% | 66% | 66% | 66% | 66% | 66% |
| Vistamaxx™ 6502 (pellet) | 20% | 20% | 20% | 20% | 20% | 20% | 20% |
| Weston® 705T | 10% | 10% | 10% | 10% | 10% | 10% | 10% |
| DHT-4C | 4% | | 2% | | | | |
| DHT-4V | | | | 2% | 4% | | |
| Zoco 102 Zinc Oxide | | 4% | 2% | 2% | | 2% | |
| Faci ZnSt SP | | | | | | 2% | 4% |
| **Results** | | | | | | | |
| Pellet feel to touch at Day 0 | Dry | Dry | Dry | Dry | Dry | Dry | Dry |
| Active phosphite content (%) as measured by HPLC after exposure at 45 °C and 80% RH | | | | | | | |
| Day 0 | 9.9 | 7.9 | 10.4 | 9.2 | 10.0 | 10.0 | 9.0 |
| Day 7 | 8.5 | 7.4 | 9.6 | 9.5 | 9.9 | 9.0 | 9.0 |
| Day 14 | | 7.3 | 9.9 | 9.3 | | 9.4 | 8.3 |
| Day 21 | | | | | | | |
| Day 28 | | | 10.0 | 9.3 | 9.7 | 9.7 | 2.8 |
| Day 35 | 8.2 | | | | | | |
| Day 42 | | 7.4 | 10.0 | 9.5 | | 8.9 | 0.06 |
| Day 58 | | | | | 9.8 | | |
| Day 70 | | | 10.0 | 9.7 | | 2.2 | 0.00 |
| Day 98 | 8.5 | 7.9 | | | | | |

Examples E50, and E51 were prepared with varying concentrations of the liquid phosphite antioxidant.

Compositions were prepared for compounding according to the formulations shown in Table 7. Compounding and testing procedures were carried out according to the method described in Example E10. Results are also tabulated in Table 7.

Examples E50 and E51 demonstrate the successful application of the present invention to increasing concentrations of the liquid phosphite Weston® 705T. The formulations showed no discernable blooming at the time of compounding; pellets felt dry to the touch at the time of compounding. The E51 pellets showed some slight agglomeration during compounding immediately after the pelletizer, but the loose agglomerate broke up easily on being transferred and did not show any re-agglomeration on repackaging and storage within the temperature controlled warehouse conditions. On exposure to a warm humid environment in the environmental chamber the Weston® 705T in Examples E50 and E51 did not show significant hydrolysis within 58 days.

**Table 7**

| Formulations | Examples | |
| --- | --- | --- |
| | E50 | E51 |
| Surpass® CCs757-A (ground) | 51.00% | 48% |
| Petrothene NA 219000 (ground) | | |
| Vistamax™ 6502 (pellet) | 30.00% | 30.00% |
| Weston® 705T | 15.00% | 18% |
| DHT-4C | 4.00% | 4.00% |
| Results | | |
| Pellet feel to touch at Time zero | dry | dry, loose agglomerate, easily broken up. |
| Active phosphite content (%) as measured by HPLC after exposure at 45 °C and 80% RH | | |
| Day 0 | 14.3 | 17.9 |
| Day 7 | 14.2 | 18.0 |
| Day 28 | 14.2 | 17.4 |
| Day 58 | 14.1 | 17.3 |

Examples E35, E36, and E37 were prepared in order to show the effect of the ratios of the First and Second Carriers on the method of the invention.

Compositions were prepared for compounding according to the formulations in Table 8. Compounding and testing procedures were carried out according to the method described in Example E10. Results are also tabulated in Table 8.

Samples were prepared for microscopy by microtoming at a temperature of -150 °C and sputter coated with C to a thickness of 12 nm. Samples were then analyzed by SEM.

Photomicroscopy by SEM showed that the Vistamaxx and Surpass® polymers formed an immiscible polymer blend. Example E10, containing 20% Vistamaxx™ 6502, was characterized by a dispersed phase of Vistamaxx™ 6502 in the Surpass® continuous phase, as shown in Figure 1. Examples E35 and E36, containing 30 and 36% Vistamaxx™ respectively, were characterized by what appeared to be a co-continuous morphology of Vistamaxx™ and Surpass. Examples E37 showed an inverted phase morphology with respect to Example E10. Example E37 was characterized by a continuous Vistamaxx™ phase. In all of E10, E35, E36 and E37, the DHT-4C can be seen as a dispersed mineral particulate.

Examples E35, E36 an E37 demonstrates the successful application the present across a range of concentrations of the two carrier polymers. On exposure to a warm humid environment in the environmental chamber the masterbatches E35 and E36 showed no significant hydrolysis of the liquid phosphite in 58 days of testing. Example E37 showed a decrease in active Weston® 705 content from 8.71% to 7.64%. While not as shelf-stable as E35 and E36, Example E37 is still much more stable than single carrier systems E22 and E26.

**Table 8**

| Formulations | Examples | | | |
| --- | --- | --- | --- | --- |
| | E10 | E35 | E36 | E37 |
| Surpass® CCs757-A (7 MI, .957 HDPE) | 66.00% | 56.00% | 50.00% | 40.00% |
| Vistamaxx™ 6502 (21 MFR, 0.865 g/cc) | 20.00% | 30.00% | 36.00% | 46.00% |
| Weston 705T | 10.00% | 10.00% | 10.00% | 10.00% |
| DHT-4C | 4.00% | 4.00% | 4.00% | 4.00% |

(continued)

| Results | | | | |
|---|---|---|---|---|
| Pellet feel to touch at Time zero | dry | dry | dry | dry |
| Morphology (Microscopy) | Disperse Vistamaxx | Co-continuous | Co-continuous | Inverted (Vistamaxx Continuous) |
| Active phosphite content (%) as measured by HPLC after exposure at 45 °C and 80% RH | | | | |
| Day 0 | 9.93 | 9.27 | 8.88 | 8.71 |
| Day 7 | 8.53 | 8.53 | 7.84 | 8.12 |
| Day 14 | | 8.83 | 7.99 | 8.33 |
| Day 28 | | 9.26 | 8.66 | 7.93 |
| Day 35 | 8.19 | | | |
| Day 42 | | 8.94 | 8.21 | 7.53 |
| Day 58 | | 9.58 | 8.88 | 7.64 |
| Day 98 | 8.54 | | | |

Examples E45 and E49 and Comparative Examples CE27 and CE28 were prepared in order to show the effect of the acid-neutralizing coadditive and the Second Carrier on masterbatches of the present invention.

Compositions were prepared for compounding according to the formulations in Table 9. Compounding and testing was carried out according to the method described in Example E10.

Approximately 200 grams of masterbatch pellets were exposed, uncovered in a petri dish in an environmental chamber under conditions of 45 °C and 80% relative humidity (RH). Samples were removed periodically and tested for the hydrolyzed LGP11 content by HPLC. HPLC quantification was carried out on a Waters 2695, equipped with a Waters (Part No. WAT052805, Nova-Pak C8, 4 $\mu$m, 3.9x100 mm) column and a Softa (Model 300S) evaporative light scattering detector.

It should be noted that the LGP-11 could not be measured directly by this method and one of the hydrolysis products of LGP-11 was measured instead. The hydrolysis product exhibits a sharp peak. A calibration curve for quantification was developed and the method was found to have an accuracy of correlation coefficient of 0.999 and relative standard deviation of <1%. Results are also tabulated in Table 9.

Comparative Example CE27 showed poor hydrolytic stability. The LGP-11 was completely hydrolyzed within 7 days. This comparative masterbatch did not include an acid neutralizing coadditive.

Comparative Example CE28 showed improved hydrolytic stability as compared to Comparative Example CE27 but was found to still hydrolyze within 70 days in the aggressive exposure conditions of 45 °C and 80% RH. This comparative masterbatch did not include a Second Carrier.

Example E45 demonstrates the successful application of the masterbatch of the present invention. Example E45 shows reduced hydrolysis of the LGP11 as compared to Comparative examples CE27 and CE28.

Example E49 demonstrates the successful application of the masterbatch of the present invention. Example E49 shows reduced hydrolysis of the LGP11 as compared to Comparative examples CE27 and CE28. Compared to Example E45, Example E49 shows a higher absolute concentration of hydrolyzed LGP11 as a function of time, but proportional to its higher initial concentration of LGP11 the level of hydrolysis is improved.

**Table 9**

| Formulations | Comparative Examples | | Examples | |
|---|---|---|---|---|
| | CE27 | CE28 | E45 | E49 |
| Surpass® CCs757-A (HDPE) | 70.00% | 86.00% | 66.00% | 51.00% |
| Vistamaxx™ 6502 | 20.00% | | 20.00% | 30.00% |
| Doverphos® LGP-11 | 10.00% | 10.00% | 10.00% | 15.00% |
| DHT-4C | | 4.00% | 4.00% | 4.00% |
| Results | | | | |
| Pellet feel to touch at Day 0 | dry | dry | dry | dry |
| HPLC measurement of hydrolysis (%) after exposure at 45 °C and 80% RH | | | | |
| Day 0 | 2.6 | 0.2 | 0.0 | 0.0 |
| Day 7 | 10.0 | 3.7 | 0.5 | 0.9 |

(continued)

| Results | | | |
|---|---|---|---|
| Day 14 | 5.2 | 3.6 | 1.3 |
| Day 21 | | 3.4 | 5.2 |
| Day 28 | 6.3 | 4.0 | 5.3 |
| Day 35 | | 3.8 | 5.4 |
| Day 42 | 6.5 | 4.8 | 6.6 |
| Day 70 | 9.3 | | |
| Day 98 | | | |

Examples E50, E51, E52 and E53 were prepared in order to show the effect of an alternate Second Carrier, the effect of the addition of an optional additional additive (a phenolic antioxidant), and the effect of a different acid-neutralizing coadditive on masterbatches of the present invention.

Compositions were prepared for compounding according to the formulations in Table 10. Compounding and testing was carried out according to the method described in Example E10.

Examples E50 and E51 demonstrates the successful application of Versify™ 4301 as an alternative Second Carrier polymer of the present invention. The masterbatches exhibit no blooming on compounding and good resistance to hydrolysis on exposure to a warm humid environment.

Example E52 demonstrates the addition of an optional additional additive as is known in the art - in this case a hindered phenolic antioxidant. Masterbatch E52 incorporates the optional additional additive Irganox 1076 to the liquid phosphite masterbatch of the present invention. The masterbatch exhibits no blooming on compounding, and exhibits good resistance to hydrolysis on exposure to a warm humid environment.

Example E52 demonstrates the addition of the optional hindered phenol antioxidant as well as the use of an alternate inorganic solid coadditive of the present invention. The masterbatch exhibits no blooming on compounding and good resistance to hydrolysis on exposure to warm humid environments.

**Table 10**

| Formulations | Examples | | | |
|---|---|---|---|---|
| | E50 | E51 | E52 | E53 |
| Petrothene® GA502024 (LLDPE) | 66.00% | 51.00% | 61.00% | 61.00% |
| Vistamaxx™ 6502 | | | 20.00% | |
| Versify™ 4301 | 20.00% | 30.00% | | 20.00% |
| Weston® 705T | 10.00% | 15.00% | 10.00% | 10.00% |
| Irganox® 1076 | | | 5.00% | 5.00% |
| Zoco 102 Zinc Oxide | 4.00% | 4.00% | 4.00% | |
| DHT-4V | | | | 4.00% |
| Results | | | | |
| Pellet feel to touch at Day 0 | dry | dry | dry | dry |
| Active phosphite content (%) as measured by HPLC after exposure at 45 °C and 80% RH | | | | |
| Day 0 | 9.02 | 14.6 | 10.4 | 9.98 |
| Day 7 | 8.97 | 13.7 | 10.1 | 9.43 |
| Day 14 | 9.15 | 13.3 | 9.90 | 9.10 |
| Day 21 | 9.20 | 13.3 | 9.85 | 9.35 |
| Day 28 | 9.33 | 12.6 | 9.56 | 9.71 |
| Day 35 | 9.09 | 13.5 | 9.54 | 8.94 |
| Day 42 | 9.80 | 13.8 | 10.6 | 10.4 |
| Day 70 | 9.23 | 13.5 | 9.86 | 9.75 |
| Day 98 | 9.37 | 14.4 | 9.71 | 9.91 |

**Claims**

1. A polyolefin masterbatch composition comprising:

    a. a liquid phosphite antioxidant present in an amount of greater than about 4% by weight based on the total weight of the composition;
    b. an inorganic solid coadditive capable of acting as an acid neutraliser present in an amount of 5 to 100% by weight based on the total weight of liquid phosphite antioxidant in the composition; and
    c. an immiscible polymer blend which comprises:

       (i) a first carrier comprising a polyethylene or polyethylene copolymer with a density greater than about 0.910 g/cm$^3$ or an isotactic homopolymer polypropylene or polypropylene impact copolymer with a density greater than about 0.898 g/cm$^3$ or a blend or combination thereof; and
       (ii) a second carrier comprising a polyolefin or polyolefin copolymer with a density less than about 0.895 g/cm$^3$ or an ethylene-vinyl acetate copolymer or an acid copolymer or a blend or combination thereof.

2. A polyolefin masterbatch composition as claimed in claim 1 wherein the ethylene-vinyl acetate copolymer has a vinyl acetate content of greater than 10% by weight.

3. A polyolefin masterbatch composition as claimed in any preceding claim wherein the first carrier is **characterized by** a solubility of a liquid phosphite in the carrier of less than 9% at 45 °C, wherein the solubility is determined by the method described in the description.

4. A polyolefin masterbatch composition as claimed in any preceding claim wherein the second carrier is **characterized by** a solubility of a liquid phosphite in the carrier of greater than 11% at 45 °C, wherein the solubility is determined by the method described the description.

5. A polyolefin masterbatch composition as claimed in any preceding claim wherein the liquid phosphite antioxidant is selected from the group comprising: triaryl phosphites, trialkyl phosphites, alkylphenol-free polymeric polyphosphites, and combinations thereof.

6. A polyolefin masterbatch composition as claimed in any preceding claim wherein the inorganic solid coadditive is present in the range 7 to 80% by weight based on the weight of the phosphite antioxidant in the composition.

7. A polyolefin masterbatch composition as claimed in any preceding claim wherein the inorganic solid coadditive is selected from the group comprising: zinc oxide, calcium oxide, synthetic hydrotalcites, hydrotalcite-like synthetic materials, dehydrated synthetic hydrotalcites, and combinations thereof.

8. A polyolefin masterbatch composition as claimed in any preceding claim wherein the first carrier is selected from the group comprising high-density polyethylene, linear low-density polyethylene, copolymers thereof, and combinations thereof.

9. A polyolefin masterbatch composition as claimed in any preceding claim wherein the first carrier is a polyethylene, a branched low density polyethylene (LDPE), a substantially linear polyolefin or alpha-olefin copolymer, a substantially linear polyethylene or polyethylene copolymer, a linear low density polyethylene (LLDPE), a high-density polyethylene (HDPE), or a polypropylene homopolymer.

10. A polyolefin masterbatch composition as claimed in any preceding claim wherein the second carrier has a solubility of the liquid phosphite antioxidant in said second carrier of greater than about 12% at 45 °C, wherein the solubility is determined by the method described in the description.

11. A polyolefin masterbatch composition as claimed in any preceding claim wherein the second carrier is selected from the group comprising ethylene-alpha olefin copolymers, ethylene-propylene copolymers, ethylene-vinyl acetate copolymers, acid copolymers and combinations thereof.

12. A polyolefin masterbatch composition as claimed in any preceding claim wherein the first and second carriers are present in a ratio of between about 20:1 and about 2:3.

**13.** A polyolefin masterbatch composition as claimed in any preceding claim further comprising additional polymer additives and carrier polymers.

**14.** A polyolefin masterbatch composition as claimed in any preceding claim wherein the second carrier exists as a dispersed phase in the first polymer carrier matrix.

**15.** A polyolefin masterbatch composition as claimed in any preceding claim wherein the first and second carriers are present as cocontinuous phases.

**Patentansprüche**

**1.** Eine Polyolefin-Masterbatch-Zusammensetzung, die Folgendes aufweist:

a. ein flüssiges Phosphit-Antioxidationsmittel, das in einer Menge von mehr als etwa 4 Gew.-%, und zwar bezogen auf das Gesamtgewicht der Zusammensetzung, vorliegt;
b. ein anorganisches festes Co-Additiv, das als ein Säureneutralisator wirken kann, der in einer Menge von 5 bis 100 Gew.-%, und zwar bezogen auf das Gesamtgewicht des flüssigen Phosphit-Antioxidationsmittels in der Zusammensetzung, vorliegt; und
c. eine nicht mischbare Polymermischung, die Folgendes aufweist:

(i) einen ersten Träger, der ein Polyethylen oder Polyethylen -Copolymer mit einer Dichte von mehr als etwa 0,910 g/cm$^3$ oder ein isotaktisches homopolymeres Polypropylen oder schlagzähes Polypropylen-Copolymer mit einer Dichte von mehr als etwa 0,898 g/cm$^3$ oder eine Mischung oder Kombination davon aufweist; und
(ii) einen zweiten Träger, der ein Polyolefin oder Polyolefin-Copolymer mit einer Dichte von weniger als etwa 0,895 g/cm$^3$ oder ein Ethylen-Vinylacetat-Copolymer oder ein Säure-Copolymer oder ein Gemisch oder eine Kombination davon aufweist.

**2.** Eine Polyolefin-Masterbatch-Zusammensetzung nach Anspruch 1, wobei das Ethylen-Vinylacetat-Copolymer einen Vinylacetatgehalt von mehr als 10 Gew.-% aufweist.

**3.** Eine Polyolefin-Masterbatch-Zusammensetzung nach einem der vorhergehenden Ansprüche, wobei der erste Träger durch eine Löslichkeit eines flüssigen Phosphits in dem Träger von weniger als 9 % bei 45 °C gekennzeichnet ist, wobei die Löslichkeit durch das in der Beschreibung beschriebene Verfahren bestimmt wird.

**4.** Eine Polyolefin-Masterbatch-Zusammensetzung nach einem der vorhergehenden Ansprüche, wobei der zweite Träger durch eine Löslichkeit eines flüssigen Phosphits in dem Träger von mehr als 11 % bei 45 °C gekennzeichnet ist, wobei die Löslichkeit durch das in der Beschreibung beschriebene Verfahren bestimmt wird.

**5.** Eine Polyolefin-Masterbatch-Zusammensetzung nach einem der vorhergehenden Ansprüche, wobei das flüssige Phosphit-Antioxidationsmittel ausgewählt ist aus der Gruppe, die Folgendes aufweist: Triarylphosphite, Trialkylphosphite, alkylphenolfreie polymere Polyphosphite und Kombinationen davon.

**6.** Eine Polyolefin-Masterbatch-Zusammensetzung nach einem der vorhergehenden Ansprüche, wobei das anorganische feste Co-Additiv im Bereich von 7 bis 80 Gew.-%, und zwar bezogen auf das Gewicht des Phosphit-Antioxidationsmittels in der Zusammensetzung, vorhanden ist.

**7.** Eine Polyolefin-Masterbatch-Zusammensetzung nach einem der vorhergehenden Ansprüche, wobei das anorganische feste Co-Additiv ausgewählt ist aus der Gruppe, die aufweist: Zinkoxid, Calciumoxid, synthetische Hydrotalcite, hydrotalcitähnliche synthetische Materialien, dehydrierte synthetische Hydrotalcite und Kombinationen davon.

**8.** Eine Polyolefin-Masterbatch-Zusammensetzung nach einem der vorhergehenden Ansprüche, wobei der erste Träger ausgewählt ist aus der Gruppe, die Polyethylen hoher Dichte, lineares Polyethylen niedriger Dichte, Copolymere davon und Kombinationen davon aufweist.

**9.** Eine Polyolefin-Masterbatch-Zusammensetzung nach einem der vorhergehenden Ansprüche, wobei der erste Träger ein Polyethylen, ein verzweigtes Polyethylen niedriger Dichte (LDPE), ein im Wesentlichen lineares Polyolefin oder Alpha-Olefin-Copolymer, ein im Wesentlichen lineares Polyethylen oder Polyethylen-Copolymer, ein lineares Polyethylen niedriger Dichte (LLDPE), ein Polyethylen hoher Dichte (HDPE) oder ein Polypropylen-Homopolymer ist.

10. Eine Polyolefin-Masterbatch-Zusammensetzung nach einem der vorhergehenden Ansprüche, wobei der zweite Träger eine Löslichkeit des flüssigen Phosphit-Antioxidationsmittels in dem zweiten Träger von mehr als etwa 12 % bei 45 °C aufweist, wobei die Löslichkeit durch das in der Beschreibung beschriebene Verfahren bestimmt wird.

11. Eine Polyolefin-Masterbatch-Zusammensetzung nach einem der vorhergehenden Ansprüche, wobei der zweite Träger ausgewählt ist aus der Gruppe, die Ethylen-Alpha-Olefin-Copolymere, Ethylen-Propylen-Copolymere, Ethylen-VinylacetatCopolymere, Säure-Copolymere und Kombinationen davon aufweist.

12. Eine Polyolefin-Masterbatch-Zusammensetzung nach einem der vorhergehenden Ansprüche, wobei der erste und der zweite Träger in einem Verhältnis zwischen etwa 20:1 und etwa 2:3 vorhanden sind.

13. Eine Polyolefin-Masterbatch-Zusammensetzung nach einem der vorhergehenden Ansprüche, die ferner zusätzliche Polymeradditive und Trägerpolymere aufweist.

14. Eine Polyolefin-Masterbatch-Zusammensetzung nach einem der vorhergehenden Ansprüche, wobei der zweite Träger als dispergierte Phase in der ersten Polymerträgermatrix vorliegt.

15. Eine Polyolefin-Masterbatch-Zusammensetzung nach einem der vorhergehenden Ansprüche, wobei der erste und der zweite Träger als cokontinuierliche Phasen vorliegen.

**Revendications**

1. Composition de mélange maître de polyoléfine comprenant :

   a. un antioxydant phosphite liquide présent en une quantité supérieure à environ 4 % en poids, par rapport au poids total de la composition ;
   b. un coadditif inorganique solide capable d'agir comme neutralisant d'acide, présent en une quantité allant de 5 à 100 % en poids, par rapport au poids total de l'antioxydant phosphite liquide dans la composition ; et
   c. un mélange de polymères immiscibles qui comprend :

   (i) un premier support comprenant un polyéthylène ou un copolymère de polyéthylène ayant une masse volumique supérieure à environ 0,910 g/cm$^3$ ou un homopolymère isotactique de polypropylène ou un copolymère de polypropylène choc ayant une masse volumique supérieure à environ 0,898 g/cm$^3$ ou un mélange ou une combinaison de ceux-ci ; et
   (ii) un deuxième support comprenant une polyoléfine ou un copolymère de polyoléfine ayant une masse volumique inférieure à environ 0,895 g/cm$^3$ ou un copolymère d'éthylène-acétate de vinyle ou un copolymère d'acide ou un mélange ou une combinaison de ceux-ci.

2. Composition de mélange maître de polyoléfine selon la revendication 1 dans laquelle le copolymère d'éthylène-acétate de vinyle a une teneur en acétate de vinyle supérieure à 10 % en poids.

3. Composition de mélange maître de polyoléfine selon une quelconque revendication précédente dans laquelle le premier support est **caractérisé par** une solubilité d'un phosphite liquide dans le support inférieure à 9 % à 45 °C, dans laquelle la solubilité est déterminée par la méthode décrite dans la description.

4. Composition de mélange maître de polyoléfine selon une quelconque revendication précédente dans laquelle le deuxième support est **caractérisé par** une solubilité d'un phosphite liquide dans le support supérieure à 11 % à 45 °C, dans laquelle la solubilité est déterminée par la méthode décrite dans la description.

5. Composition de mélange maître de polyoléfine selon une quelconque revendication précédente dans laquelle l'antioxydant phosphite liquide est choisi dans le groupe comprenant : des triarylphosphites, des trialkylphosphites, des polyphosphites polymères exempts d'alkylphénol et leurs combinaisons.

**6.** Composition de mélange maître de polyoléfine selon une quelconque revendication précédente dans laquelle le coadditif inorganique solide est présent dans la plage de 7 à 80 % en poids, par rapport au poids de l'antioxydant phosphite dans la composition.

**7.** Composition de mélange maître de polyoléfine selon une quelconque revendication précédente dans laquelle le coadditif inorganique solide est choisi dans le groupe comprenant : l'oxyde de zinc, l'oxyde de calcium, les hydrotalcites synthétiques, les matériaux synthétiques de type hydrotalcite, les hydrotalcites synthétiques déshydratés et leurs combinaisons .

**8.** Composition de mélange maître de polyoléfine selon une quelconque revendication précédente dans laquelle le premier support est sélectionné parmi le groupe comprenant du polyéthylène haute densité, du polyéthylène basse densité linéaire, des copolymères de ceux-ci et de combinaisons de ceux-ci.

**9.** Composition de mélange maître de polyoléfine selon une quelconque revendication précédente dans laquelle le premier support est un polyéthylène, un polyéthylène basse densité ramifié (LDPE), une polyoléfine ou un copolymère d'alpha-oléfine sensiblement linéaire, un polyéthylène ou un copolymère de polyéthylène sensiblement linéaire, un polyéthylène basse densité linéaire (LLDPE), un polyéthylène haute densité (HDPE) ou un homopolymère de polypropylène.

**10.** Composition de mélange maître de polyoléfine selon une quelconque revendication précédente, dans laquelle le deuxième support a une solubilité de l'antioxydant phosphite liquide dans ledit deuxième support supérieure à environ 12 % à 45 °C, dans laquelle la solubilité est déterminée par la méthode décrite dans la description.

**11.** Composition de mélange maître de polyoléfine selon une quelconque revendication précédente dans laquelle le deuxième support est sélectionné parmi le groupe comprenant des copolymères d'éthylène-alpha-oléfine, des copolymères d'éthylène-propylène, des copolymères d'éthylène-acétate de vinyle, des copolymères d'acide et de combinaisons de ceux-ci.

**12.** Composition de mélange maître de polyoléfine selon une quelconque revendication précédente dans laquelle le premier et le deuxième support sont présents dans un rapport compris entre environ 20:1 et environ 2:3.

**13.** Composition de mélange maître de polyoléfine selon une quelconque revendication précédente comprenant en outre des additifs pour polymères supplémentaires et des polymères supports.

**14.** Composition de mélange maître de polyoléfine selon une quelconque revendication précédente dans laquelle le deuxième support se présente sous forme d'une phase dispersée dans la matrice du premier support polymère.

**15.** Composition de mélange maître de polyoléfine selon une quelconque revendication précédente, dans laquelle le premier et le deuxième support sont présents sous forme de phases cocontinues.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7888414 B
- US 8563637 B
- US 8981042 B
- US 8563637 B2

- US 20190300659 A
- US 8445567 A
- US 3787537 A
- US 7842748 B2

**Non-patent literature cited in the description**

- *CHEMICAL ABSTRACTS*, 31570-04-4
- **JOHNSON et al.** Impact of Improved Phosphite Hydrolytic Stability on the Processing Stabilization of Polypropylene. *J. Vinyl Add Tech*, 2005
- *CHEMICAL ABSTRACTS*, 939402-02-5

- Compendium of Polymer Terminology and Nomenclature. IUPAC Recommendations. RSC Publishing, 2008
- *CHEMICAL ABSTRACTS*, 864-56-2